# EUROPÄISCHE PATENTSCHRIFT

(11) **EP 1 029 759 B1**
(45) Veröffentlichungstag und Bekanntmachung des Hinweises auf die Patenterteilung: **17.12.2008**
(21) Anmeldenummer: 99103278.0
(22) Anmeldetag: 19.02.1999
(51) Int. Cl.: B60S 3/00

(54) **Vorrichtung zum Trocknen, insbesondere von Fahrzeugen**
Drying device, in particular for vehicles
Dispositif de séchage, en particulier pour véhicules

(43) Veröffentlichungstag der Anmeldung: 23.08.2000
(73) Patentinhaber: Otto Christ AG, 87734 Benningen (DE)
(72) Erfinder: Christ, Otto, 87700 Memmingen (DE)
(74) Vertreter: Pfister, Helmut

(56) Entgegenhaltungen:
- DE-A- 4 431 099
- GB-A- 1 247 742
- US-A- 4 817 301
- US-A- 4 979 316
- PATENT ABSTRACTS OF JAPAN vol. 016, no. 270 (M-1266), 17. Juni 1992 (1992-06-17) & JP 04 066354 A (DAIFUKU CO LTD), 2. März 1992 (1992-03-02)

## Beschreibung

Die Erfindung betrifft eine Waschstrasse mit einer Vorrichtung zum Trocknen von Gegenständen, zum Beispiel von Fahrzeugen, bestehend im wesentlichen aus einem Gebläse und einer daran angeordneten Düse, wobei die Vorrichtung um eine Schwenkachse schwenkbar ist.

Vorrichtungen zum Trocknen von Fahrzeugen sind hinlänglich bekannt. Insbesondere gibt es solche, deren Luftaustrittsdüsen sich in horizontaler Richtung erstrecken, zum Beispiel zum Trocknen der horizontalen Flächen der Fahrzeuge. Durch Schwenken der Austrittsdüse um eine zum Beispiel horizontal orientierte Achse ist sie auch zum Trocknen der Front- und Heckpartie eines Fahrzeuges geeignet. Die Erfindung wird nachfolgend insbesondere beim Trocknen von Fahrzeugen beschrieben, ohne die Erfindung hierauf zu beschränken. Sie ist in gleicher Weise geeignet auch andere Gegenstände zu trocknen.

Zum Trocknen der Seitenflächen von Fahrzeugen ist eine andere Anordnung notwendig. Bisher wurde eine Einheit aus Gebläse und Düse verwendet, wobei sich die schlitzförmige Luftaustrittsöffnung der Düse in vertikaler Richtung erstreckt und das Gebläse zum Ansaugen von Luft oberhalb der Düse angeordnet ist. Um sich den verschieden geneigten Seitenflächen der Fahrzeuge besser anpassen zu können, ist die Trocknungsvorrichtung so an dem die verschiedenen Wasch- und Trockenwerkzeuge der Waschanlage tragenden Gestell angeordnet, daß sie um eine im wesentlichen horizontale Schwenkachse, die zum Beispiel parallel zur Fahrzeuglängsachse angeordnet ist, um einen bestimmten Winkel aus der vertikalen Lage neigbar ist. Zu diesem Zweck ist im unteren Bereich der Düse besagte Schwenkachse vorgesehen, um die die Schwenkbewegung mittels Hebeln ausgeführt wird. Bei diesen Vorrichtungen ist zu beachten, daß insbesondere das Gebläse, welches oberhalb der Düse angeordnet ist, ab einem bestimmten Verstellwinkel ein enormes zusätzliches Drehmoment in Richtung auf das Fahrzeug aufweist, welches von der Lagerung entsprechend aufgefangen werden muß. Hieraus resultieren verhältnismäßig aufwendige Lagerungen und Sicherungen, damit diese Trocknungsvorrichtung nicht auf das Fahrzeug zu kippen droht.

Aus der DE 44 31 099 A1 ist eine Vorrichtung zum Trocknen von Fahrzeugen, wie vorher beschrieben, bekannt.

Es ist Aufgabe der Erfindung eine Waschstrasse mit einer Vorrichtung, wie eingangs beschrieben, dahingehend weiterzuentwickeln, daß der Herstellungsaufwand für die Lagerung der Trocknungsvorrichtung verringert wird.

Diese Aufgabe der Erfindung wird gelöst durch eine Waschstrasse mit einer Vorrichtung zum Trocknen von Fahrzeugen, bestehend im Wesentlichen aus einem Gebläse und einer daran angeordneten Düse, wobei die Vorrichtung um eine Schwenkachse schwenkbar ist und das Gebläse an oder etwas außerhalb der Schwenkachse angeordnet ist, die sich dadurch auszeichnet, dass die Schwenkachse unterhalb der Düse und die Düse oberhalb des Gebläses im unteren Bereich der Vorrichtung angeordnet ist und die Lufteinzugsrichtung des Gebläses senkrecht zur Schwenkachse so angeordnet ist, dass Luft von einem Bereich angesaugt wird, der von der Waschstrasse weg orientiert ist.

Von Vorteil ist es dabei, daß das verhältnismäßig schwere Gebläse der Trocknungsvorrichtung an oder in der Nähe der Schwenkachse angeordnet ist. Dadurch ist der Schwerpunkt näher an dem Drehpunkt orientiert und das auftretende Drehmoment ist somit geringer. Dadurch wird der Aufwand für die Lagerung und auch für die Sicherung des Gebläses gegen ein unerwünschtes Kippen der Vorrichtung gegen das Fahrzeug deutlich gesenkt.

Eine Möglichkeit der Anordnung besteht darin, den Schwerpunkt der Trocknungsvorrichtung genau mit der Schwenkachse zusammenfallen zu lassen. Das Gebläse, welches mit dem Antriebsmotor ein beachtliches Gewicht aufweist, ist zum Beispiel auf oder an der Schwenkachse anzuordnen. In diesem Fall sind die Kräfte, die zum Verschwenken der Vorrichtung notwendig sind, am geringsten.

In einer Variante der Erfindung ist vorgesehen, daß sich das Gebläse in der Nähe der horizontalen Schwenkachse befindet, wobei hierbei ein verhältnismäßig kurzer Abstand, zum Beispiel in der Größenordnung des Durchmessers des Gebläses oder des doppelten Betrages hiervon, besteht. Günstigerweise wird hierbei das Gebläse auf der dem zu trocknenden Gegenstand (zum Beispiel dem Fahrzeug) abgewandten Seite angeordnet, wodurch sich ein Rückstellmoment bezüglich der Verkippbewegung der Vorrichtung gegen das Fahrzeug ausbildet, derart, daß die Vorrichtung selbständig in die Ausgangslage, also in die Lage vertikal orientierter Düse zurückfällt.

In einer bevorzugten Ausgestaltung der Erfindung ist vorgesehen, daß die Schwenkachse im wesentlichen horizontal orientiert ist. Eine solche Anordnung ist insbesondere dann von Vorteil, wenn die Seitenflächen eines Fahrzeuges zu trocknen sind. Die Erfindung ist aber in gleicher weise auch bei schräg oder vertikal orientierten Anordnungen einsetzbar.

Die Düse erstreckt sich in einer Variante der Erfindung unterhalb des Gebläses, wobei dies den Vorteil hat, daß der Schwerpunkt des Gebläses genau in der Schwenkachse liegen kann, der Schwerpunkt der gesamten Vorrichtung aber etwas unterhalb der Schwenkachse verlagert ist. Die Vorrichtung pendelt sich dann immer so ein, daß ihre schlitzförmige Luftaustrittsöffnung vertikal ausgerichtet ist. Es bedarf nur geringer Kräfte die Vorrichtung soweit zu schwenken, daß die Luft immer im optimalen Winkel auf die zu trocknende Fläche auftrifft. Dadurch ist es möglich den Arbeitszylinder beziehungsweise die Antriebe kleiner, und somit kostengünstiger auszugestalten.

Entsprechend der Erfindung erstreckt sich die Düse oberhalb des Gebläses. Das Gebläse ist dann zum Beispiel in der Nähe des Bodens der Waschanlage angeordnet. Moderne Fahrzeuge weisen eine nach oben zurückweichende Karosserieform auf. Um ein optimales Trocknungsergebnis zu erreichen, werden die Vorrichtungen gegen die Karosserie geschwenkt. Befindet sich die Verschwenkachse im unteren Bereich, zum Beispiel in Höhe der Räder, so kann durch einen verhältnismäßig geringen Schwenkwinkel die gesamte Seitenfläche des Fahrzeuges getrocknet werden. In diesem Fall schließt sich kurz oberhalb der Verschwenkachse bereits die Düse an, die auch oberhalb des Gebläses ist. Das Gebläse befindet sich hierbei verhältnismäßig nahe bei der Verschwenkachse, wodurch die auftretenden Momente und Kräfte verhältnismäßig gering bleiben. Auch ist die hier vorgeschlagene Ausgestaltung im Hinblick auf die Montage beziehungsweise Wartung von Vorteil. Vorgenannte Vorrichtungen dienen nicht nur dazu, Personenkraftfahrzeuge mit einer maximalen Höhe von 2 m zu trocknen, sondern die erfindungsgemäßen Vorrichtungen werden zum Beispiel auch bei Lastkraftwagen oder größeren Gegenständen eingesetzt. Ist zum Beispiel der Gebläsemotor zu warten oder zu tauschen, ist bei einer umgedrehten Anordnung ein deutlich größerer Aufwand nötig, weil das Montieren auf einer Leiter und so weiter auch für das Wartungspersonal gefährlicher ist.

In einer bevorzugten Ausgestaltung der Erfindung ist vorgesehen, daß die Lufteinzugsrichtung des Gebläses senkrecht zur Schwenkachse ist.

Gerade bei der Anordnung des Gebläses in der Nähe des Bodens ist es vorteilhaft, die Rotationsachse des turbinenartigen Gebläses gegenüber den Ausführungen nach dem Stand der Technik um 90° zu drehen. Die Luft in diesem Bereich ist durch die ständige Berieselung mit Wasser sehr feucht und eine parallele Ausrichtung des Gebläses würde diese Feuchtigkeit mit ansaugen. Der Wirkungsgrad des Trocknens wäre somit gering. Eine derartige Anordnung des Gebläses gegenüber den länglichen Düsen bewirkt auch eine homogenere Luftverteilung, so daß die zu trocknende Fläche gleichmäßig angeblasen wird.

Nach der Erfindung ist es vorgesehen, daß die Lufteinzugsöffnung des Gebläses von der Waschstraße wegorientiert ist. Im Bereich, in dem das Gebläse die Flüssigkeit von dem Fahrzeug bläst, ist die Luftfeuchtigkeit am größten. Um das Trocknungsergebnis aber zu erhöhen wird vorgesehen, die Lufteinzugsöffnung so anzuordnen, daß Luft von einem Bereich angesaugt wird, der von der Waschstraße wegorientiert ist. Zum Beispiel ist es bereits ausreichend, wenn die Luft in dem Bereich hinter dem Portal außerhalb der Waschstraße angesaugt wird. Es ist aber auch möglich, die Luft durch einen entsprechenden Kanal, zum Beispiel aus dem Freien oder aus einer Lufttrocknungseinheit, heranzuleiten.

Die gesamte Trocknungsvorrichtung ist zum Beispiel an dem die Waschbürsten und Trockenwerkzeuge tragenden Gestell gelagert. Je nach Verschwenken der Vorrichtung ist ein Arbeitszylinder vorgesehen, der sich über eine Rolle entweder an der Vorrichtung oder am Gestell beziehungsweise am Boden abstützt. Dieser Arbeitszylinder ist zum Beispiel hydraulisch oder auch pneumatisch angetrieben. Es ist jedoch auch denkbar, die Trocknungs-vorrichtung mittels eines Motors über Riemenantrieb oder auch Zahnräder zu bewegen.

Die Anordnung bewirkt, daß keine aufwendige Führung des Arbeitszylinders bei der Verkippbewegung vorgesehen werden muß. Die Rolle erlaubt, daß sich der Arbeitszylinder bei beliebigen Verschwenkwinkeln in gewünschter Weise abstützt. Daraus resultiert eine sehr einfache Anordnung des Verschwenkmechanismusses. Es ist hierbei vorgesehen, daß der Verschwenkmechanismus, also zum Beispiel der Antrieb beziehungsweise der Arbeitszylinder, entweder an der beweglichen Vorrichtung oder stillstehend an dem Gestell angeordnet ist. Es ist auch vorteilhaft, wenn das Gebläse bezüglich der Schwenkachse so angeordnet ist, daß auf die Vorrichtung ein der Bewegung des Arbeitszylinders entgegengesetztes Rückstellmoment besteht. Durch diese Anordnung entfallen im wesenlichen die aufwendigen Sicherungsvorrichtungen, die verhindern, daß die Vorrichtung ungewollt auf das zu trocknende Fahrzeug kippt. Bei Ausfall der gesamten Waschanlage bewirkt das Rückstellmoment, daß sich die Trocknungsvorrichtung selbständig in ihre vertikale Lage bewegt.

Der Schwenkwinkel der Düse ist durch die definierte Längenausdehnung des Arbeitszylinders oder den Drehwinkel des Motors begrenzt. Es ist aber auch möglich, einen Anschlag beispielsweise an der Halterung vorzusehen, der eine weitere Schwenkbewegung der Trocknungsvorrichtung verhindert. Dieser Anschlag ist zum Beispiel so angeordnet, daß beispielsweise die Düse mit ihrem oberen Ende anschlägt, vorteilhafterweise ist der Anschlag jedoch am Gestell vorgesehen, dessen Verstrebungen, die zur Stabilität des Gestelles dienen, gleichzeitig die Funktion des Anschlages übernehmen.

Diese Trocknungsvorrichtung ist insbesondere für die Verwendung in Waschanlagen vorgesehen, deren letzter Arbeitsgang das Entfernen des Waschwassers auf der Oberfläche der gewaschenen Fahrzeuge ist. Bei Waschstraßen, bei denen die Waschfahrzeuge von einer Schleppeinrichtung durchgezogen werden, ist die Trocknungsvorrichtung an einem feststehenden Gestell angeordnet.

Es gibt auch Waschstraßen, bei denen das Fahrzeug stillsteht und die Waschwerkzeuge an einem längs der Fahrzeugrichtung fahrbaren Portal angeordnet sind. Hier kann sich natürlich der Arbeitszylinder nicht am Boden abstützen, sondern an einer Plattform an dem Portal.

Im folgenden wird die Erfindung anhand von Zeichnungen näher erläutert. Es zeigen:

| | |
|---|---|
| Fig. 1 | die erfindungsgemäße Trocknungsvorrichtung in Ruhestellung; |
| Fig. 2 | die Trocknungsvorrichtung nach Fig. 1 in geneigter Stellung. |

Mit 1 ist die Trocknungsvorrichtung einer Autowaschanlage bezeichnet, die die Funktion, hat am Ende des Waschvorgangs das verbliebene Waschwasser von der seitlichen Oberfläche eines Fahrzeuges wegzublasen. Die Trocknungsvorrichtung 1 besteht im wesentlichen aus einem Gebläse 2 und einer daran angeordneten Düse 3. In diesem Ausführungsbeispiel einer Trocknungsvorrichtung 1 ist das Gebläse 2 im unteren Bereich der Waschanlage angeordnet, wobei auch die Schwenkachse 4 zum Neigen der gesamten Vorrichtung 1 in diesem Bereich vorgesehen ist.

Die Rotationsachse des turbinenartigen Gebläses 2 steht senkrecht zur Längsachse des zu waschenden und trocknenden Fahrzeugs beziehungsweise senkrecht zu der Schwenkachse 4 und ist mit seiner Lufteinzugsöffnung 5 von der Waschstraße aus wegorientiert. So saugt das Gebläse 2 immer relativ trockene Luft ein, obwohl es durch seine Anordnung in der Nähe des Bodens ständiger Feuchtigkeit ausgesetzt ist.

Oberhalb des Gebläses 2 ist eine Düse 3 angeordnet, die eine schlitzförmige Öffnung 6 zum Austritt der angesaugten Luft aufweist. Die Strömungsrichtung der Luft beim Austritt aus der Düse 3 ist hierbei ebenfalls im wesentlichen senkrecht zur Schwenkachse 4. Die Luft wird von einem turbinenartigen Gebläse 2 angesaugt und radial in die Düse gepumpt. Hierbei ist die Rotationsachse des Gebläses 2 senkrecht zur Schwenkachse 4 orientiert. Diese Anordnung hat den Vorteil, daß die Luft gleichmäßiger in der Düse 3 verteilt wird und somit die Strömung der Luft an allen Austrittstellen der Düse 3 annähernd gleich ist.

Die schlitzförmige Düsenaustrittsöffnung 6 ist im Ruhezustand der Anlage vertikal ausgerichtet. Da jedoch die meisten Fahrzeuge eine Karosserie aufweisen, deren Seitenflächen nach oben geneigt sind, die Fahrzeuge sind im oberen Bereich in der Regel schmaler als im unteren, ist es für den Trocknungsvorgang vorteilhaft, wenn der Abstand der Düsenöffnung 6 im oberen Bereich annähernd genausoweit entfernt ist wie im unteren. Zu diesem Zweck ist vorgesehen, die Trocknungsvorrichtung 1 entsprechend dem Fahrzeugtyp zu neigen.

Wie bereits erwähnt, ist die Schwenkachse 4, um die die gesamte Trocknungsvorrichtung 1 geneigt werden soll, an oder in der Nähe des Gebläses 2 beziehungsweise umgekehrt das Gebläse 2 an oder in der Nähe der horizontal orientierten Schwenkachse 4 angeordnet. Dies hat den Vorteil, dadurch daß das Gebläse 2 relativ schwer ist, auch der Schwerpunkt der Trocknungsvorrichtung 1 ebenfalls in der Nähe der Schwenkachse 4 liegt. Es sind dadurch zum Schwenken dieser Trocknungsvorrichtung 1 relativ geringe Kräfte notwendig und durch Anordnung des Schwerpunkts etwas außerhalb der Schwenkachse 4 auf der Rückseite wird erreicht, daß die Trocknungsvorrichtung 1 von selbst immer in ihre Ausgangsstellung zurückgestellt wird, wenn die Kräfte, die das Neigen verursachen, ausbleiben.

Durch diese Anordnung wird eine hohe Sicherheit erreicht, so daß es nicht möglich ist, daß die Trocknungsvorrichtung 1 versehentlich auf die Karosserie eines Fahrzeugs fällt und es somit beschädigt.

Die verschwenkbewegung der Trocknungsvorrichtung wird einerseits durch die ganz eingezogene Kolbenstange des Arbeitszylinders 10 begrenzt, die dann zum Beispiel auf einem Teil des Gehäuses des Gebläses 2 am Boden 7 des Gestells 8 aufliegt. Diese Anlagestelle ist mit 9 gekennzeichnet.

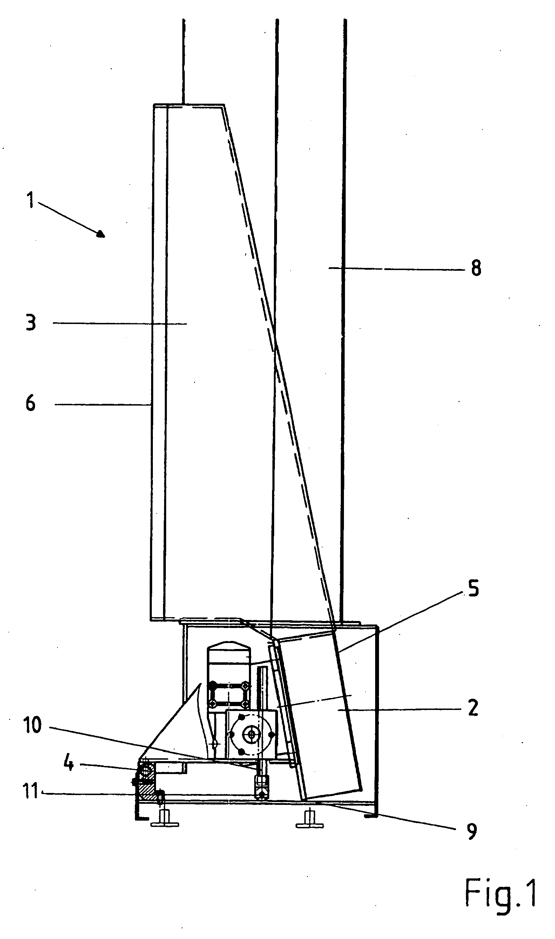

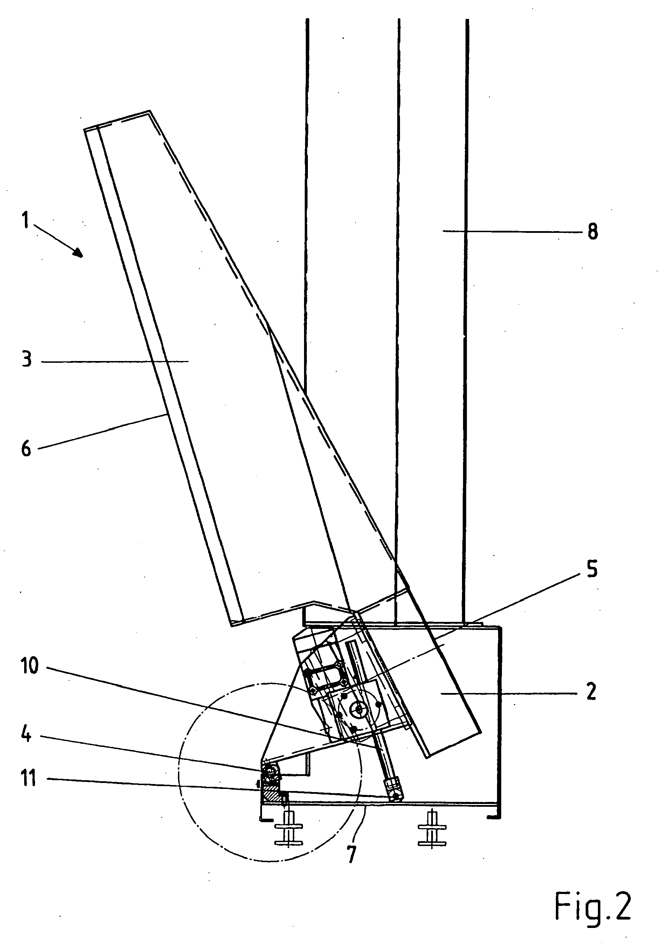

In der geneigten Stellung gemäß Fig. 2 sind zum Beispiel Anschläge an dem Gestell 8 beziehungsweise der Düse 3 vorgesehen (nicht sichtbar) die ein weiteres Verschwenken der Düse 3 verhindern.

Das Gestell 8 ist bei den Waschanlagen, bei denen die Fahrzeuge mittels einer Schleppeinrichtung durchgezogen werden, entweder fest auf dem Boden befestigt oder auf einem fahrbaren Portal angeordnet, welches sich über das Fahrzeug hinwegbewegt.

Mit 10 ist ein Arbeitszylinder als Schwenkantrieb bezeichnet, der, hydraulisch oder pneumatisch angetrieben, die Trocknungsvorrichtung 1 in eine geneigte Stellung bringt. Er ist in diesem Ausführungsbeispiel fest mit der Trocknungsvorrichtung 1 verbunden und weist an seinem freien Ende der Kolbenstange eine Rolle 11 auf, mittels der er sich beim Ausfahren an dem Boden 7 oder einer an dem Gestell 8 angeordneten Plattform abstützt. Der Schwenkwinkel der Trocknungsvorrichtung 1 wird begrenzt durch die Längenausdehnung des Arbeitszylinders 10 und zusätzlich durch Verstrebungen/Anschläge an dem Gestell 8, die zu dessen Stabilität beitragen, aber gleichzeitig eine Sicherungsfunktion übernehmen, um zu verhindern, daß die Trocknungsvorrichtung 1 zu weit in den Bereich der Waschstraße hineinragen kann und eventuell Fahrzeuge beschädigt werden würden. Die Rolle 11 erlaubt es, daß sich der Arbeitszylinder 10 über seine Kolbenstange auch bei beliebigem Verschwenkungswinkel auf dem Boden 7 abstützt. Ein zusätzliches Gelenk oder aufwendige Führung ist hierbei nicht notwendig.

Es ist nun möglich, für jedes zu trocknende Fahrzeug den gleichen Neigungswinkel in der Trocknungsvorrichtung 1 einzustellen. Es ist jedoch von Vorteil diesen individuell für jedes Fahrzeug zu ändern, um einen optimalen Trocknungseffekt zu erzielen. Deshalb ist in einer weiteren vorteilhaften Variante an der Düse 3 ein Sensor vorgesehen, beispielsweise ein mechanischer oder optischer Abtaster, der den Befehl zum Einstellen eines bestimmten Winkels an den Arbeitszylinder 10 weitergibt. Anstelle des Arbeitszylinders 10 kann die Schwenkbewegung auch über den Riemenantrieb eines Motors oder über Zahnräder erfolgen.

Das Fahrzeug, das sich zum Beispiel in Fig. 2 auf der linken Seite neben der Düse 3 befindet, ist bezüglich der Verschwenkachse 4 auf der anderen Seite als das Gebläse 2 angeordnet. In Fig. 2 ist der maximale Verschwenkwinkel angedeutet. Bei entsprechender Ausgestaltung ist dieser Verschwenkwinkel größer oder kleiner zu dimensionieren. Durch die Anordnung insbesondere der schweren Elemente, nämlich des Gebläses 2 und dessen Motor auf der dem Fahrzeug abgewandten Seite der verschwenkachse, liegt somit auch der Schwerpunkt seitlich neben der Schwenkachse, wodurch ein der Bewegung des Arbeitszylinders 10 entgegengerichtetes Rückstellmoment besteht.

## Patentansprüche

1. Waschstrasse mit einer Vorrichtung (1) zum Trocknen von Fahrzeugen, bestehend im Wesentlichen aus einem Gebläse (2) und einer daran angeordneten Düse (3), wobei die Vorrichtung (1) um eine Schwenkachse (4) schwenkbar ist und das Gebläse (2) an oder etwas außerhalb der Schwenkachse (4) angeordnet ist, **dadurch gekennzeichnet, dass** die Schwenkachse (4) unterhalb der Düse (3) und die Düse oberhalb des Gebläses (2) im unteren Bereich der Vorrichtung (1) angeordnet sind und die Lufteinzugsrichtung des Gebläses (2) senkrecht zur Schwenkachse (4) so angeordnet ist, dass Luft von einem Bereich angesaugt wird, der von der Waschstraße wegorientiert ist.

2. Waschstrasse nach Anspruch 1, **dadurch gekennzeichnet, dass** ein Kanal für die Lufteinzugsöffnung (5) vorgesehen ist, um Luft aus dem Freien oder aus einer Lufttrocknungseinheit herzuleiten.

3. Waschstrasse nach einem oder beiden der vorhergehenden Ansprüche, **dadurch gekennzeichnet, dass** die Lufteinzugsöffnung (5) in dem Bereich hinter einem Portal außerhalb der Waschstrasse vorgesehen ist.

4. Waschstrasse nach einem oder mehreren der vorhergehenden Ansprüche, **dadurch gekennzeichnet, dass** die Rotationsachse des Gebläses (2) senkrecht zur Schwenkachse (4) orientiert ist.

5. Waschstrasse nach einem oder mehreren der vorhergehenden Ansprüche, **dadurch gekennzeichnet, dass** die Vorrichtung (1) mittels eines Schwenkantriebes verschwenkbar ist und sich der Schwenkantrieb über eine Rolle am Boden abstützt.

6. Waschstrasse nach Anspruch 5 **dadurch gekennzeichnet, daß** der Schwenkantrieb als Arbeitszylinder (10) ausgebildet ist.

7. Waschstrasse nach einem oder mehreren der vorhergehenden Ansprüche, **dadurch gekennzeichnet, daß** der Schwerpunkt der Vorrichtung genau mit der Schwenkachse (4) zusammenfällt.

8. Waschstrasse nach einem oder mehreren der vorhergehenden Ansprüche, **dadurch gekennzeichnet, daß** die Schwenkachse (4) im wesentlichen horizontal orientiert ist.

9. Waschstrasse nach Anspruch 6 , **dadurch gekennzeichnet, daß** das Gebläse (2) bezüglich der Schwenkachse (4) so angeordnet ist, daß auf die Vorrichtung (1) ein der Bewegung des Arbeitszylinders (10) entgegengesetztes Rückstellmoment besteht.

10. Waschstrasse nach einem oder mehreren der vorhergehenden Ansprüche, **dadurch gekennzeichnet, daß** der Schwenkwinkel (4) der Vorrichtung (1) begrenzt ist.

11. Waschstrasse nach einem oder,mehreren der vorhergehenden Ansprüche, **dadurch gekennzeichnet, daß** sich der Schwerpunkt beziehungsweise das Gebläse. (2) sowohl in der vertikalen als auch in der verschwenkten Stellung in Bezug auf das zu trocknende Fahrzeug abgewandten Seite der Schwenkachse (4) befindet.

12. Waschstrasse nach einem oder mehreren der vorhergehenden Ansprüche, **dadurch gekennzeichnet, daß** die Strömungsrichtung der Luft beim Austritt aus der Düse senkrecht zur Schwenkachse (4) ist.

13. Waschstrasse nach einem oder mehreren der vorhergehenden Ansprüche, **dadurch gekennzeichnet, daß** die Waschstraße ein Portal aufweist und eine Relativbewegung zum zu reinigenden Fahrzeug besteht und das Portal die Vorrichtung (1) trägt.

14. Waschstrasse nach einem oder mehreren der vorhergehenden Ansprüche, **dadurch gekennzeichnet, daß** der Schwenkwinkel (4) der Vorrichtung (1) durch einen Anschlag (9) am Portal beschränkt ist.

## Claims

1. Vehicle wash with a device (1) for drying vehicles, comprising essentially a blower (2) and a nozzle (3) arranged at it, the device (1) swivelling around a swivelling axis (4), and the blower (2) being arranged on or slightly outside the swivelling axis (4), **characterised in that** the swivelling axis (4) is arranged below the nozzle (3), and the nozzle is arranged above the blower (2) in the bottom region of the device (1), and the air draw-in device of the blower (2) is arranged perpendicularly to the swivelling axis (4) in such a way that the air is taken in by a region facing the opposite direction of the vehicle wash.

2. Vehicle wash according to claim 1, **characterised in that** a channel is provided for the air draw-in opening (5) in order to feed air from the open or from an air drying unit.

3. Vehicle wash according to one or both of the preceding claims, **characterised in that** the air draw-in opening (5) is provided in the area behind a portal outside the vehicle wash.

4. Vehicle wash according to one or more of the preceding claims, **characterised in that** the rotational axis of the blower (2) is orientated perpendicularly to the swivelling axis (4).

5. Vehicle wash according to one or more of the preceding claims, **characterised in that** the device (1) can be swivelled by means of a swivelling drive, and the swivelling drive is supported through a roller on the floor.

6. Vehicle wash according to claim 5, **characterised in that** the swivelling drive is designed as working cylinder (10).

7. Vehicle wash according to one or more of the preceding claims, **characterised in that** the gravity center of the device coincides exactly with the swivelling axis (4).

8. Vehicle wash according to one or more of the preceding claims, **characterised in that** the swivelling axis (4) is orientated essentially horizontal.

9. Vehicle wash according to claim 6, **characterised in that** the blower (2) is arranged with reference to the swivelling axis (4) in such a way that on the device (1) there is a righting moment acting in opposite direction of the movement of the working cylinder (10).

10. Vehicle wash according to one or more of the preceding claims, **characterised in that** the swivelling angle (4) of the device (1) is restricted.

11. Vehicle wash according to one or more of the preceding claims, **characterised in that** the center of gravity or the blower (2) is located in the vertical as well as in the swivelled position on the opposite side of the swivelling axis (4) with reference to the vehicle to be dried.

12. Vehicle wash according to one or more of the preceding claims, **characterised in that** the flow direction of the air on leaving the nozzle is perpendicularly to the swivelling axis (4).

13. Vehicle wash according to one or more of the preceding claims, **characterised in that** the vehicle wash has a portal, and a relative movement exists to the vehicle to be cleaned, and the portal carries the device (1).

14. Vehicle wash according to one or more of the preceding claims, **characterised in that** the swivelling angle (4) of the device (1) is limited by a stopper (9) at the portal.

## Revendications

1. Tunnel de lavage comportant un dispositif (1) permettant de sécher des véhicules, consistant essentiellement en une soufflerie (2) et une tuyère (3) fixée sur la soufflerie, le dispositif (1) pouvant pivoter autour d'un axe de pivotement (4) et la soufflerie (2) étant située sur l'axe de pivotement (4) ou à côté de cet axe, **caractérisé en ce que** l'axe de pivotement (4) est situé en dessous de la tuyère (3) et la tuyère est située au-dessus de la soufflerie (2) et dans la partie inférieure du dispositif (1) et **en ce que** la direction d'aspiration d'air de la soufflerie (2) est perpendiculaire à l'axe de pivotement (4) ce qui permet d'aspirer de l'air d'une zone autre que celle du tunnel de lavage.

2. Tunnel de lavage selon la revendication 1, **caractérisé en ce qu'**il existe un canal lié à l'ouverture d'aspiration d'air (5) afin de conduire l'air venant de l'extérieur ou d'une unité produisant de l'air sec.

3. Tunnel de lavage selon une ou deux des revendications précédentes, **caractérisé en ce que** l'ouverture d'aspiration d'air (5) est située dans une zone se trouvant derrière un portique à l'extérieur du tunnel de lavage.

4. Tunnel de lavage selon une ou plusieurs des revendications précédentes, **caractérisé en ce que** l'axe de rotation de la soufflerie (2) est orienté perpendiculairement à l'axe de pivotement (4).

5. Tunnel de lavage selon une ou plusieurs des revendications précédentes, **caractérisé en ce que** le dispositif (1) peut être pivoté grâce à une commande de pivotement s'appuyant au sol via une roue.

6. Tunnel selon la revendication 5, **caractérisé en ce que** la commande de pivotement est un vérin (10).

7. Tunnel de lavage selon une ou plusieurs des revendications précédentes, **caractérisé en ce que** le centre de gravité du dispositif est précisément aligné avec l'axe de pivotement (4).

8. Tunnel de lavage selon une ou plusieurs des revendications précédentes, **caractérisé en ce que** l'axe de pivotement (4) est orienté approximativement horizontalement.

9. Tunnel de lavage selon la revendication 6, **caractérisé en ce que** la soufflerie (2) est située par rapport à l'axe de pivotement (4) de façon à ce qu'un moment mécanique de rappel agisse sur le dispositif (1) en sens opposé au mouvement du vérin (10).

10. Tunnel de lavage selon une ou plusieurs des revendications précédentes, **caractérisé en ce que** l'angle de pivotement (4) du dispositif (1) est limité.

11. Tunnel de lavage selon une ou plusieurs des revendications précédentes, **caractérisé en ce qu'**en position verticale ou inclinée, la soufflerie (2) ou son centre de gravité se trouve toujours du côté opposé au véhicule à sécher par rapport à son axe de pivotement (4).

12. Tunnel selon une ou plusieurs des revendications précédentes, **caractérisé en ce que** le courant d'air sortant de la tuyère est orienté perpendiculairement à l'axe de pivotement (4).

13. Tunnel selon une ou plusieurs des revendications précédentes, **caractérisé en ce que** le tunnel de lavage comporte un portique supportant le dispositif (1) et **en ce qu'**il existe un mouvement relatif entre le portique et le véhicule à nettoyer.

14. Tunnel de lavage selon une ou plusieurs des revendications précédentes, **caractérisé en ce que** l'angle de pivotement (4) du dispositif (1) est limité par une butée (9) située au niveau du portique.
